# EUROPEAN PATENT SPECIFICATION

(11) **EP 3 635 249 B1**
(45) Date of publication and mention of the grant of the patent: **11.09.2024**
(21) Application number: 18799377.9
(22) Date of filing: 07.05.2018
(51) Int. Cl.: F03D 13/20, E02D 27/42

(54) **TOWER ASSEMBLY FOR A WIND TURBINE AND METHOD FOR ADJUSTING SUCH A TOWER**
TURMANORDNUNG FÜR EINE WINDKRAFTANLAGE UND VERFAHREN ZUR JUSTIERUNG SOLCH EINES TURMS
MONTAGE DE TOUR POUR UNE TURBINE A VENT ET MÉTHODE DE RÉGLAGE D'UNE TELLE TOUR

(30) Priority: 10.05.2017 US 201715591176
(43) Date of publication of application: 15.04.2020
(73) Proprietor: General Electric Renovables España, S.L., 08005 Barcelona (ES)
(72) Inventor: KRISTEVA, Nikolina K., Greenville, SC 29615 (US); MADGE, Daniela, Greenville, SC 29615 (US)
(74) Representative: Zimmermann & Partner Patentanwälte mbB
(86) International application number: PCT/US2018/031321
(87) International publication number: WO 2018/208648

(56) References cited:
- EP-A2- 2 060 706
- WO-A1-02/38891
- WO-A1-2017/039922
- US-A1- 2006 225 379
- US-A1- 2011 140 426
- US-A1- 2013 174 508
- US-A1- 2014 102 039
- US-B1- 6 467 233

## Description

### FIELD OF THE INVENTION

The present invention relates generally to a tower assembly according to claim 1 and a method according to claim 7 for adjusting a tower of a wind turbine, and more particularly, to tower assemblies for wind turbines having adjustable hub heights.

### BACKGROUND OF THE INVENTION

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The rotor blades capture kinetic energy from wind using known airfoil principles and transmit the kinetic energy through rotational energy to turn a main shaft coupling the rotor blades to a gearbox, or if a gearbox is not used, directly to the generator. The generator then converts the mechanical energy to electrical energy that may be deployed to a utility grid.

The wind turbine tower typically includes a base tower section secured to a foundation and one or more upper tower sections secured atop the base tower section to form a tower of a certain height. The foundation may be a concrete slab foundation, an anchor cage foundation, or any other suitable foundation capable of supporting loads produced by the wind and/or gravitational forces. Further, each tower section generally includes a cylindrical wall defining an outer diameter and an inner diameter separated by a radial thickness that is uniform along the entire length of the sections. WO 2017/039922 A1 relates to a concrete equipment tower with tensioning tendon guide slot. The tower may include a foundation, a bottom tower portion, a middle tower portion, a top tower portion and a steel tip adapter. The steel tip adapter may be used to support a nacelle of a wind turbine. Each tower portion may be formed with a plurality of tower segments, respectively, that may be formed of precast concrete. Transition segments may be positioned between appropriate tower portions to accommodate a progressive change in the diameter of tower segments from the bottom to the top of equipment tower. US 2013/0174508 A1 relates to a platform assembly for a wind turbine tower. EP 2 060 706 A2 relates to a tower with a platform.

The overall tower height of wind turbines may be dependent on a number of factors. For example, the tower height may vary based on environmental conditions at the wind turbine site and/or costs of materials. In addition, increasing the tower height allows for longer rotor blades which in turn produce more power. Thus, conventional tower heights can be increased or decreased by modifying the number of tower sections stacked together. In addition, when the tower height is modified, additional manufacturing steps are required to ensure that the tower can withstand site and component loading. More specifically, if a certain site requires a tower with an increased height to harvest higher wind speeds, the cylindrical walls of the corresponding wall sections are designed with a thicker radial thickness to account for higher loads. Alternatively, if a certain site requires a tower having a lower height to harvest lower wind speeds, the cylindrical walls of the corresponding wall sections are designed with a thinner radial thickness to save material costs. In addition, whether a tower is designed with a thicker or thinner radial thickness, it is difficult for an operator to tell the difference when assembling the tower. As such, tower heights have to be specifically designed for differing site and loading conditions. In addition, additional efforts are spent identifying and locating which tower sections should be used for which tower, e.g. at a wind farm.

Accordingly, an improved tower assembly for a wind turbine that addresses the aforementioned issues would be desired in the art. Thus, the present disclosure is directed to a tower assembly for a wind turbine having an adjustable hub height that does not require a redesign for every site.

### BRIEF DESCRIPTION OF THE INVENTION

In one aspect, the present disclosure is directed to a tower assembly according to independent claim 1. A tower assembly for a wind turbine having an adjustable height includes at least one base tower section having a cylindrical base wall defining an overall length extending from a first end to a second end. The cylindrical base wall further defines an outer diameter that is uniform along the entire length from the first end to the second end. The tower assembly also includes an adjustable upper tower section arranged atop the base tower section. The upper tower section includes a first tower portion integral with a second tower portion. The first tower portion includes a first tower wall portion defining a first length extending from a first end to a second end. Further, the first tower wall portion includes a tapering cross-section from the first end to the second end of the first length thereof. The second tower portion includes a second tower wall portion defining a second length extending from a first end to a second end. Further, the second tower wall portion defines a uniform cylindrical cross-section from the first end to the second end of the second length thereof.

In one embodiment, the tapering cross-section of the first tower wall portion may taper towards the second tower portion.

In another embodiment, the tower assembly may further include a transitional tower section arranged between the base tower section and the upper tower section. In such embodiments, the transitional tower section includes an outer wall defining a length extending from a first end to a second end. Further, in certain embodiments, the outer wall of the transitional tower section may define an outer diameter that tapers along the length thereof.

In further embodiments, the second tower portion of the upper tower section may include an upper tower can mountable to a nacelle of the wind turbine. In addition, the second tower portion of the upper tower section may be constructed of one or more removable tower cans arranged below the upper tower can.

In additional embodiments, the tower assembly may further include at least one platform in any one of the base tower section, the transitional tower section, and/or the upper tower section. For example, in one embodiment, the tower assembly may include at least one platform in the second tower portion of the upper tower section.

In another aspect, the present disclosure is directed to an adjustable upper tower section for a tower of a wind turbine. The upper tower section includes a first tower portion having a first tower wall portion defining a first length extending from a first end to a second end. The first tower wall portion includes a tapering cross-section from the first end to the second end of the first length thereof. The upper tower section also includes a second tower portion integral with the first tower portion. The second tower portion includes a second tower wall portion defining a second length extending from a first end to a second end. The second tower wall portion defines a uniform cylindrical cross-section from the first end to the second end of the second length thereof. It should also be understood that the upper tower section may further include any of the additional features as described herein.

In yet another aspect, the present disclosure is directed to a method according to the independent method claim. A method for adjusting a tower height of a wind turbine includes securing a base tower section to a foundation. The base tower section has a cylindrical base wall defining an outer diameter that is uniform along its entire length. The method also includes mounting an adjustable upper tower section atop the base tower section. The upper tower section has a first tower portion integral with an adjustable second tower portion. The first tower portion has a first tower wall portion defining a first length extending from a first end to a second end. Further, the first tower wall portion has a tapering cross-section from the first end to the second end of the first length thereof. The second tower portion has a second tower wall portion defining a second length extending from a first end to a second end. Moreover, the second tower wall portion defines a uniform cylindrical cross-section from the first end to the second end of the second length thereof. Thus, the method further includes evaluating at least one of site conditions or loading conditions of the wind turbine and adjusting a height of the second tower portion based on the evaluation.

In one embodiment, the step of adjusting the height of the second tower portion based on the evaluation may include adding or removing at least one tower can of the second tower portion. More specifically, in certain embodiments, the step of adding or removing at least one tower can to the second tower portion may include adding or removing at least one tower can below an upper tower can of the second tower portion.

In another embodiment, the method may include mounting a transitional tower section between the base tower section and the upper tower section. In such embodiments, the transitional tower section may include an outer wall defining a length extending from a first end to a second end. More specifically, as mentioned, the outer wall of the transitional tower section may define an outer diameter that tapers along the length thereof.

In additional embodiments, the method may also include installing at least one platform in the second tower portion after adding or removing at least one tower can thereto. It should be understood that the method may further include any of the additional steps, features and/or embodiments as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a front view of one embodiment of a tower assembly according to the present disclosure, particularly illustrating different height configurations of the tower assembly;
FIG. 3 illustrates an elevation view of the base tower section of the tower assembly according to the present disclosure;
FIG. 4 illustrates a cross-sectional view of the base tower section of FIG. 3 along line 3-3;
FIG. 5 illustrates an elevation view of the adjustable upper tower section of the tower assembly according to the present disclosure;
FIG. 6 illustrates a cross-sectional view of the adjustable upper tower section of FIG. 5 along line 6-6;
FIG. 7 illustrates a cross-sectional view of the adjustable upper tower section of FIG. 5 along line 7-7;
FIG. 8 illustrates an elevation view of the transitional tower section of the tower assembly according to the present disclosure;
FIG. 9 illustrates a cross-sectional view of the transitional tower section of FIG. 8 along line 8-8;
FIG. 10 illustrates a front view of another embodiment of a tower assembly according to the present disclosure, particularly illustrating platforms in each tower section of the tower assembly; and
FIG. 11 illustrates a flow diagram of one embodiment of a method for adjusting a tower height of a wind turbine.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention as claimed by the appended claims. For instance, features illustrated or described as part of one embodiment can be used with another embodiment to yield a still further embodiment. Thus, it is intended that the present invention covers such modifications and variations as come within the scope of the appended claims.

Generally, the present disclosure is directed to a tower assembly for a wind turbine having an adjustable height. As such, in some instances, the hub height can be adjusted to 100% tower capacity so as to maximize energy production. More specifically, the tower assembly includes an adjustable upper tower section having a first tower portion integral with a second tower portion. The first tower portion includes a first tower wall portion defining a first length extending from a first end to a second end. Further, the first tower wall portion includes a tapering cross-section from the first end to the second end of the first length thereof. The second tower portion includes a second tower wall portion defining a second length extending from a first end to a second end. Further, the second tower wall portion defines a uniform cylindrical cross-section from the first end to the second end of the second length thereof. In addition, the second tower portion is constructed of a plurality of removable tower cans that can be added or removed to adjust an overall height of the tower assembly.

In other words, the adjustable upper tower section has a partially cylindrical cross-section providing many advantages not present in the prior art. For example, the tower assembly of the present disclosure is configured to optimize the tower height (and therefore hub height) based on site and/or loading conditions. Further, by providing a tower assembly with a height can that be easily increased, higher energy levels can be achieved at multiple wind turbine sites. Moreover, the tower assembly of the present disclosure provides a flexible assembly that can be easily sourced multiple wind turbine sites. In addition, the tower assembly of the present disclosure allows for positioning of the same platform for multiple configurations or heights of the tower assembly.

Thus, if a certain wind turbine site has lower wind speeds, the adjustable upper tower section can extend higher in order to harvest the higher winds and utilize 100% original tower capacity. Alternatively, if a certain site has lower wind speeds, the adjustable upper tower section can be shortened to accommodate the lower winds and not exceed 100% original tower capacity. Further, the tower sections described herein that are below the upper tower section are identical and the upper section differs only by the length of the cylindrical segment.

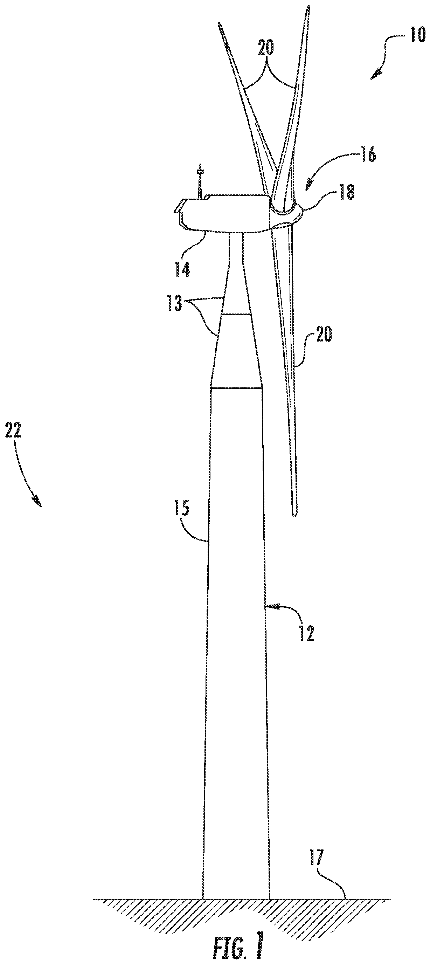

Referring now to the drawings, FIG. 1 illustrates a perspective view of one embodiment of a wind turbine 10 according to the present disclosure. As shown, the wind turbine 10 generally includes a tower 12, a nacelle 14 mounted on the tower 12, and a rotor 16 coupled to the nacelle 14. The tower 12 extends generally perpendicular to a foundation or support surface 17 may be secured to the foundation 17 using any suitable means, such as anchor bolts (not shown). Further, the tower 12 (also generally referred to herein as a tower assembly 22) includes a plurality of tower sections, including for example, a base tower section 15 and at least one upper tower section 13. The rotor 16 includes a rotatable hub 18 and at least one rotor blade 20 coupled to and extending outwardly from the hub 18. For example, in the illustrated embodiment, the rotor 16 includes three rotor blades 20. However, in an alternative embodiment, the rotor 16 may include more or less than three rotor blades 20. Each rotor blade 20 may be spaced about the hub 18 to facilitate rotating the rotor 16 to enable kinetic energy to be transferred from the wind into usable mechanical energy, and subsequently, electrical energy. For instance, the hub 18 may be rotatably coupled to an electric generator (not shown) positioned within the nacelle 14 to permit electrical energy to be produced.

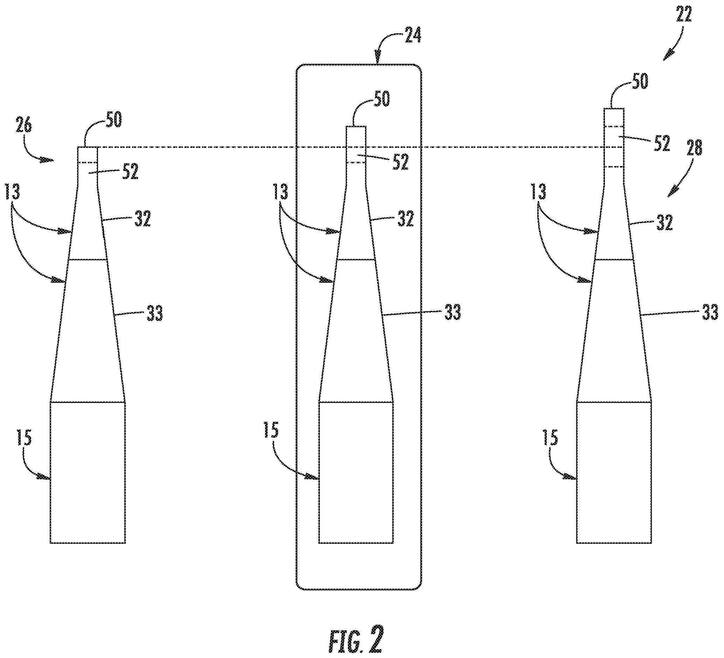

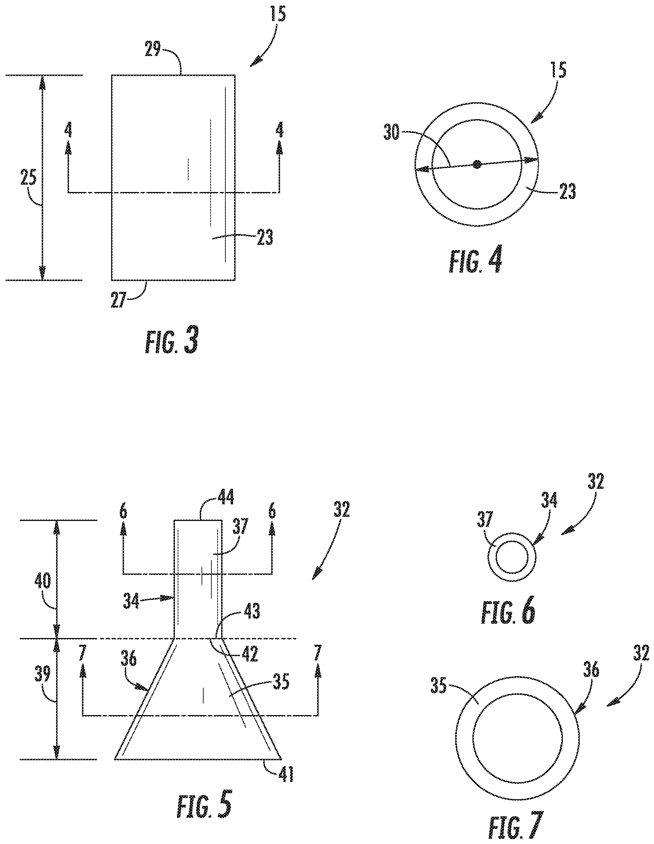

Referring now to FIG. 2, various embodiments of a tower assembly 22 for a wind turbine 10 having an adjustable height according to the present disclosure is illustrated. More specifically, as shown, FIG. 2 illustrates three variations of the tower assembly 22, namely, a baseline configuration 24, a reduced height configuration 26, and an increased height configuration 28. Further, as shown, the tower assembly 22 includes at least one base tower section 15. As shown in FIGS. 3 and 4, the base tower section 15 has a substantially cylindrical base wall 23 defining an overall length 25 extending from a first end 27 to a second end 29. The cylindrical base wall 23 further defines an outer diameter 30 that is uniform along the entire length 25 from the first end 27 to the second end 29.

Referring back to FIGS. 1 and 2, the tower assembly 22 also includes at least one upper tower section 13 arranged atop the base tower section 15. More specifically, as shown in FIG. 2, the upper tower section(s) 13 includes at least an adjustable height upper tower section 32. For example, as shown in FIGS. 5-7, the adjustable upper tower section 32 includes a first tower portion 36 integral with a second tower portion 34. In addition, as shown in FIGS. 5 and 7, the first tower portion 36 includes a first tower wall portion 35 defining a first length 39 extending from a first end 41 to a second end 42. Moreover, as shown in FIG. 5, the first tower wall portion 35 includes a tapering cross-section from the first end 41 to the second end 42 of the first length 39 thereof. More specifically, as shown, the tapering cross-section of the first tower wall portion 35 may taper towards the second tower portion 34. In alternative embodiments, the tapering cross-section of the first tower wall portion 35 may taper away from the second tower portion 34.

Further, as shown in FIGS. 5 and 6, the second tower portion 34 includes a second tower wall portion 37 defining a second length 40 extending from a first end 43 to a second end 44. In contrast to the first tower portion 36, however, the second tower wall portion 37 defines a uniform cylindrical cross-section from the first end 43 to the second end 44 of the second length 40 thereof. As such, the adjustable upper tower section 32 is a partially-cylindrical, partially-tapered tower section.

Referring back to FIG. 2, the second tower portion 34 of the adjustable upper tower section 32 may be constructed of one or more tower cans 52 (as indicated by the dotted lines), which allow the overall tower height to be adjusted. For example, as shown, the baseline configuration 24 of the tower assembly may include a predetermined number of tower cans 52 suitable for a tower height at a wind turbine site with normal wind conditions. If the tower assembly 22 is needed at a site having lower wind speeds, however, as shown in the reduced height configuration 26, one or more of the tower cans 52 may be removed. Alternatively, as shown in the increased height configuration 28, if the tower assembly 22 is needed at a site having higher wind speeds, one or more of the tower cans 52 may be added.

More specifically, as shown in the illustrated embodiment, the second tower portion 34 of the adjustable upper tower section 32 may further include an upper tower can 50 mountable to the nacelle 14 of the wind turbine 10. For example, the upper tower can 50 may be specifically designed (e.g. with flanges, bolt holes, etc.) for mounting the tower assembly 22 to the nacelle 14 and/or a yaw bearing configured between the nacelle 14 and the top of the tower 12. Thus, in such embodiments, one or more of the lower tower cans 52 are removed or added, leaving the upper tower can 50 in place.

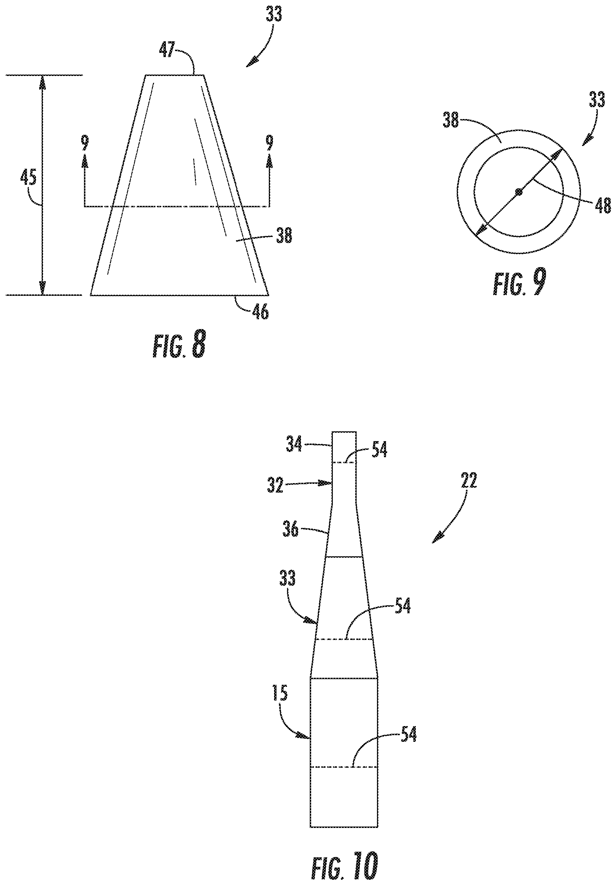

In addition, in certain embodiments, as shown in FIG. 2, the upper tower section(s) 13 may also include one or more transitional tower sections 33 arranged between the base tower section 15 and the adjustable upper tower section 32. In such embodiments, as shown in FIGS. 8 and 9, the transitional tower section 33 includes an outer wall 38 defining a length 45 extending from a first end 46 to a second end 47. Further, as shown, the outer wall 38 of the transitional tower section 33 may define an outer diameter 48 that tapers along the length 45 thereof.

Referring now to FIG. 10, the tower assembly 10 may further include at least one platform 54 in any one of the base tower section 15, the transitional tower section 33, and/or the adjustable upper tower section 32. For example, as shown, the tower assembly 22 includes a platform 54 in each of the illustrated sections. More specifically, as shown, the tower assembly 22 includes a platform 54 in the second tower portion 34 of the adjustable upper tower section 32. Thus, due to the cylindrical shape of the second tower wall portion 37 of the second tower portion 34, the same platform 54 can be used for all configurations 24, 26, 28 of the tower assembly 22.

Accordingly, every time the hub height is adjusted as described herein, the upper platform elevation changes since the platform is typically always at the same distance from the top of the upper tower section 32 to allow for service and maintenance of the top section joint. Since the upper tower section 32 is also tapered to connect the maximum ground diameter to the required machine support diameter, the diameter of that platform changes as well and requires a redesign. Providing a cylindrical region at the top of the upper tower section 32 allows for using the same platform with the same diameter for each adjusted elevation.

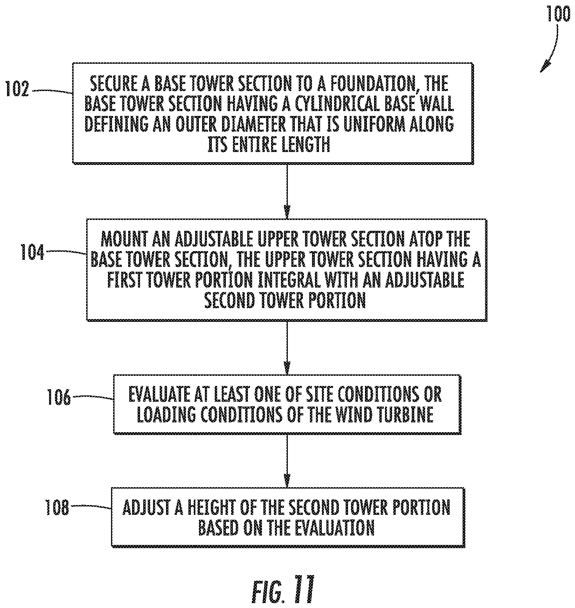

Referring now to FIG. 11, a flow diagram of one embodiment of a method 100 for adjusting a tower height of a wind turbine 10 using the tower assembly 22 of the present disclosure is illustrated. As shown at 102, the method 100 includes securing the base tower section 15 of the tower assembly 22 to a foundation 17. As shown at 104, the method 100 includes mounting the adjustable upper tower section 32 atop the base tower section 15. As shown at 106, the method 100 evaluating site conditions and/or loading conditions of the wind turbine 10. As shown at 108, the method 100 adjusting the height of the second tower portion 34 of the tower assembly 22 based on the evaluation. More specifically, in one embodiment, the height of the second tower portion 34 may be adjusted by adding or removing at least one tower can 52 of the second tower portion. In particular embodiments, as mentioned, the method 100 may include adding or removing at least one tower can 52 below the upper tower can 50 of the second tower portion 34.

In another embodiment, the method 100 may include mounting the transitional tower section 33 between the base tower section 15 and the adjustable upper tower section 32. In additional embodiments, the method 100 may also include installing at least one platform 54 in the second tower portion 34 after adding or removing at least one tower 52 can thereto.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A tower assembly for a wind turbine (10) having an adjustable height, the tower assembly comprising:
at least one base tower section (15) comprising a cylindrical base wall (23) defining an overall length (25) extending from a first end (27) to a second end (29), the cylindrical base wall (23) further defining an outer diameter (30) that is uniform along the entire length (25) from the first end (27) to the second end (29); and,
an adjustable upper tower section (13) arranged atop the base tower section (15), the upper tower section (13) comprising a first tower portion (36) integral with a second tower portion (34), the first tower portion (36) comprising a first tower wall portion (35) defining a first length (39) extending from a first end (41) to a second end (42), the first tower wall portion (35) comprising a tapering cross-section from the first end (41) to the second end (42) of the first length (39) thereof, the second tower portion (34) comprising a second tower wall portion (37) defining a second length (40) extending from a first end (43) to a second end (44), the second tower wall portion (37) defining a uniform cylindrical cross-section from the first end (43) to the second end (44) of the second length (40) thereof;
wherein the second tower portion (34) of the upper tower section (13) further comprises an upper tower can (50) mountable to a nacelle (14) of the wind turbine (10), the upper tower can (50) providing a cylindrical region at the top of the upper tower section (13); and wherein the second tower portion (34) of the upper tower section (13) is constructed of one or more removable tower cans (52) arranged below the upper tower can (50).

2. The tower assembly of claim 1, wherein the tapering cross-section of the first tower wall portion (35) tapers towards the second tower portion (34).

3. The tower assembly of claims 1 or 2, further comprising a transitional tower section (33) arranged between the base tower section (15) and the upper tower section (13), the transitional tower section (33) comprising an outer wall (38) defining a length (45) extending from a first end (46) to a second end (47).

4. The tower assembly of claim 2, wherein the outer wall (38) of the transitional tower section (33) further defines an outer diameter (48) that tapers along the length (45) thereof.

5. The tower assembly of any of the preceding claims, further comprising at least one platform (54) in at least one of the base tower section (15), the transitional tower section (33), or the upper tower section (13).

6. The tower assembly of claim 5, further comprising at least one platform (54) in the second tower portion (34) of the upper tower section (13).

7. A method for adjusting a tower height of a wind turbine (10), the method comprising:
securing a base tower section (15) to a foundation, the base tower section (15) having a cylindrical base wall (23) defining an outer diameter that is uniform along its entire length;
mounting an adjustable upper tower section (13) atop the base tower section (15), the upper tower section (13) having a first tower portion (36) integral with an adjustable second tower portion (34), the first tower portion (36) having a first tower wall portion (35) defining a first length (39) extending from a first end to a second end, the first tower wall portion (35) having a tapering cross-section from the first end to the second end of the first length (39) thereof, the second tower portion (34) having a second tower wall portion (37) defining a second length (40) extending from a first end to a second end, the second tower wall portion (37) defining a uniform cylindrical cross-section from the first end to the second end of the second length (40) thereof;
evaluating at least one of site conditions or loading conditions of the wind turbine (10); and,
adjusting a height of the second tower portion (34) based on the evaluation;
wherein adjusting the height of the second tower portion (34) based on the evaluation further comprises adding or removing at least one tower can of the second tower portion (34); and wherein adding or removing at least one tower can to the second tower portion (34) further comprises adding or removing at least one tower can below an upper tower can (55) of the second tower portion (34), the upper tower can (55) being mountable to a nacelle (14) of the wind turbine (10), and the upper tower can (50) providing a cylindrical region at the top of the upper tower section (13).

8. The method of claim 7, further comprising mounting a transitional tower section (33) between the base tower section (15) and the upper tower section (13), the transitional tower section (33) comprising an outer wall (38) defining a length (45) extending from a first end (46) to a second end (47).

9. The method of claim 8, wherein the outer wall (38) of the transitional tower section (33) further defines an outer diameter (48) that tapers along the length (45) thereof.

10. The method of claim 7, 8, or 9, further comprising installing at least one platform (54) in the second tower portion (34) after adding or removing at least one tower can (52) thereto.

## Patentansprüche

1. Turmanordnung für eine Windturbine (10) mit einer einstellbaren Höhe, wobei die Turmanordnung umfasst:
mindestens einen Turmbasisabschnitt (15), der eine zylindrischen Basiswand (23) umfasst, die eine Gesamtlänge (25) definiert, die sich von einem ersten Ende (27) zu einem zweiten Ende (29) erstreckt, wobei die zylindrische Basiswand (23) ferner einen Außendurchmesser (30) definiert, der entlang der gesamten Länge (25) von dem ersten Ende (27) zu dem zweiten Ende (29) gleichmäßig ist; und,
einen verstellbaren oberen Turmabschnitt (13), der oben auf dem Basisturmabschnitt (15) angeordnet ist, wobei der obere Turmabschnitt (13) einen ersten Turmabschnitt (36) aufweist, der mit einem zweiten Turmabschnitt (34) integral ist, wobei der erste Turmabschnitt (36) einen ersten Turmwandteil (35) aufweist, der eine erste Länge (39) definiert, die sich von einem ersten Ende (41) zu einem zweiten Ende (42) erstreckt, wobei der erste Turmwandabschnitt (35) einen sich verjüngenden Querschnitt vom ersten Ende (41) zum zweiten Ende (42) seiner ersten Länge (39) aufweist, wobei der zweite Turmabschnitt (34) einen zweiten Turmwandabschnitt (37) aufweist, der eine zweite Länge (40) definiert, die sich von einem ersten Ende (43) zu einem zweiten Ende (44) erstreckt, wobei der zweite Turmwandabschnitt (37) einen gleichmäßigen zylindrischen Querschnitt vom ersten Ende (43) zum zweiten Ende (44) seiner zweiten Länge (40) definiert;
wobei der zweite Turmabschnitt (34) des oberen Turmabschnitts (13) ferner eine obere Turmkapsel (50) umfasst, die an einer Gondel (14) der Windturbine (10) angebracht werden kann, die obere Turmkapsel (50) einen zylindrischen Bereich an der Spitze des oberen Turmabschnitts (13) aufweist; und wobei der zweite Turmabschnitt (34) des oberen Turmabschnitts (13) aus einer oder mehreren abnehmbaren Turmkapseln (52) aufgebaut ist, die unterhalb der oberen Turmkapsel (50) angeordnet sind.

2. Turmanordnung nach Anspruch 1, wobei der sich verjüngende Querschnitt des ersten Turmwandteils (35) sich zum zweiten Turmabschnitt (34) hin verjüngt.

3. Turmanordnung nach Anspruch 1 oder 2, ferner umfassend einen Übergangs-Turmabschnitt (33), der zwischen dem Basis-Turmabschnitt (15) und dem oberen Turmabschnitt (13) angeordnet ist, wobei der Übergangs-Turmabschnitt (33) eine Außenwand (38) umfasst, die eine Länge (45) definiert, die sich von einem ersten Ende (46) zu einem zweiten Ende (47) erstreckt.

4. Turmanordnung nach Anspruch 2, wobei die Außenwand (38) des Turmübergangsabschnitts (33) ferner einen Außendurchmesser (48) definiert, der sich entlang seiner Länge (45) verjüngt.

5. Turmanordnung nach einem der vorhergehenden Ansprüche, die ferner mindestens eine Plattform (54) in mindestens einem von dem Basisturmabschnitt (15), dem Übergangsturmabschnitt (33) oder dem oberen Turmabschnitt (13) umfasst.

6. Turmanordnung nach Anspruch 5, ferner umfassend mindestens eine Plattform (54) im zweiten Turmabschnitt (34) des oberen Turmabschnitts (13).

7. Verfahren zum Einstellen der Turmhöhe einer Windturbine (10), wobei das Verfahren umfasst:
Befestigen eines Basisturmabschnitts (15) an einem Fundament, wobei der Basisturmabschnitt (15) eine zylindrische Basiswand (23) aufweist, die einen Außendurchmesser definiert, der über seine gesamte Länge gleichmäßig ist;
Anbringen eines verstellbaren oberen Turmabschnitts (13) auf dem Basisturmabschnitt (15), wobei der obere Turmabschnitt (13) einen ersten Turmabschnitt (36) aufweist, der mit einem verstellbaren zweiten Turmabschnitt (34) integral ist, wobei der erste Turmabschnitt (36) einen ersten Turmwandabschnitt (35) aufweist, der eine erste Länge (39) definiert, die sich von einem ersten Ende zu einem zweiten Ende erstreckt, wobei der erste Turmwandabschnitt (35) einen sich verjüngenden Querschnitt vom ersten Ende zum zweiten Ende seiner ersten Länge (39) aufweist, wobei der zweite Turmabschnitt (34) einen zweiten Turmwandabschnitt (37) aufweist, der eine zweite Länge (40) definiert, die sich von einem ersten Ende zu einem zweiten Ende erstreckt, wobei der zweite Turmwandabschnitt (37) einen gleichmäßigen zylindrischen Querschnitt vom ersten Ende zum zweiten Ende seiner zweiten Länge (40) definiert;
Auswerten mindestens einer der Standortbedingungen oder der Lastbedingungen der Windturbine (10); und,
Einstellen der Höhe des zweiten Turmabschnitts (34) auf der Grundlage der Bewertung;
wobei das Einstellen der Höhe des zweiten Turmabschnitts (34) auf der Grundlage der Auswertung ferner das Hinzufügen oder Entfernen mindestens eines Turmgehäuses des zweiten Turmabschnitts (34) umfasst; und wobei das Hinzufügen oder Entfernen mindestens eines Turmgehäuses zu dem zweiten Turmabschnitt (34) ferner das Hinzufügen oder Entfernen mindestens eines Turmgehäuses unterhalb eines oberen Turmgehäuses (55) des zweiten Turmabschnitts (34) umfasst, wobei das obere Turmgehäuse (55) an einer Gondel (14) der Windturbine (10) montierbar ist, und der obere Turm (50) kann einen zylindrischen Bereich an der Spitze des oberen Turmabschnitts (13) aufweisen.

8. Verfahren nach Anspruch 7 umfasst ferner die Montage eines Übergangsturmabschnitts (33) zwischen dem Basisturmabschnitt (15) und dem oberen Turmabschnitt (13), wobei der Übergangsturmabschnitt (33) eine Außenwand (38) umfasst, die eine Länge (45) definiert, die sich von einem ersten Ende (46) zu einem zweiten Ende (47) erstreckt.

9. Verfahren nach Anspruch 8, wobei die Außenwand (38) des Übergangs-Turmabschnitts (33) ferner einen Außendurchmesser (48) definiert, der sich entlang seiner Länge (45) verjüngt.

10. Verfahren nach Anspruch 7, 8 oder 9 umfasst ferner die Installation mindestens einer Plattform (54) in dem zweiten Turmabschnitt (34) nach dem Hinzufügen oder Entfernen mindestens einer Turmkapsel (52) zu diesem.

## Revendications

1. Ensemble tour pour une éolienne (10), ayant une hauteur réglable, l'ensemble tour comprenant :
au moins une section de tour de base (15) comprenant une paroi de base cylindrique (23) définissant une longueur totale (25) s'étendant d'une première extrémité (27) à une seconde extrémité (29), la paroi de base cylindrique (23) définissant en outre un diamètre extérieur (30) qui est uniforme sur toute la longueur (25) de la première extrémité (27) à la seconde extrémité (29) ; et,
une section de tour supérieure réglable (13) disposée sur la section de tour de base (15), la section de tour supérieure (13) comprenant une première partie de tour (36) solidaire d'une seconde partie de tour (34), la première partie de tour (36) comprenant une première partie de paroi de tour (35) définissant une première longueur (39) s'étendant d'une première extrémité (41) à une seconde extrémité (42), la première partie de paroi de tour (35) comprenant une section transversale effilée de la première extrémité (41) à la seconde extrémité (42) de la première longueur (39) de celle-ci, la seconde partie de tour (34) comprenant une seconde partie de paroi de tour (37) définissant une seconde longueur (40) s'étendant d'une première extrémité (43) à une seconde extrémité (44), la seconde partie de paroi de tour (37) définissant une section transversale cylindrique uniforme à partir de la première extrémité (43) à la seconde extrémité (44) de la seconde longueur (40) de celle-ci ;
dans lequel la seconde partie de tour (34) de la section de tour supérieure (13) comprend en outre une boîte de tour supérieure (50) pouvant être montée sur une nacelle (14) de l'éolienne (10), la boîte de tour supérieure (50) fournissant une région cylindrique au sommet de la section de tour supérieure (13) ; et dans lequel la seconde partie de tour (34) de la section supérieure de tour (13) est constituée d'une ou plusieurs boîtes de tour amovibles (52) disposées sous la boîte de tour supérieure (50).

2. Ensemble tour selon la revendication 1, dans lequel la section transversale de la première partie de paroi de tour (35) se rétrécit vers la seconde partie de tour (34).

3. Ensemble tour selon les revendications 1 ou 2, comprenant en outre une section de tour de transition (33) disposée entre la section de tour de base (15) et la section de tour supérieure (13), la section de tour de transition (33) comprenant une paroi extérieure (38) définissant une longueur (45) s'étendant d'une première extrémité (46) à une seconde extrémité (47).

4. Ensemble tour selon la revendication 2, dans lequel la paroi extérieure (38) de la section de tour transitoire (33) définit en outre un diamètre extérieur (48) qui se rétrécit sur sa longueur (45).

5. Ensemble tour selon l'une quelconque des revendications précédentes, comprenant en outre au moins une plate-forme (54) dans au moins l'une des sections de la tour de base (15), la section de la tour de transition (33), ou la section de la tour supérieure (13).

6. Ensemble tour selon la revendication 5, comprenant en outre au moins une plate-forme (54) dans la seconde partie de tour (34) de la section supérieure de tour (13).

7. Procédé destiné à régler une hauteur de tour d'une éolienne (10), le procédé comprenant :
la fixation d'une section de tour de base (15) à une fondation, la section de tour de base (15) ayant une paroi de base cylindrique (23) définissant un diamètre extérieur qui est uniforme sur toute sa longueur ;
le montage d'une section de tour supérieure réglable (13) sur la section de tour de base (15), la section de tour supérieure (13) ayant une première partie de tour (36) solidaire d'une seconde partie de tour (34) réglable, la première partie de tour (36) ayant une première partie de paroi de tour (35) définissant une première longueur (39) s'étendant d'une première extrémité à une seconde extrémité, la première partie de paroi de tour (35) a une section transversale effilée de la première extrémité à la seconde extrémité de la première longueur (39), la seconde partie de tour (34) a une seconde partie de paroi de tour (37) définissant une seconde longueur (40) s'étendant d'une première extrémité à une seconde extrémité, la seconde partie de paroi de tour (37) définissant une section transversale cylindrique uniforme de la première extrémité à la seconde extrémité de la seconde longueur (40) de celle-ci ;
l'évaluation d'au moins l'une des conditions du site ou des conditions de charge de l'éolienne (10) ; et,
le réglage de la hauteur de la seconde partie de tour (34) sur la base de l'évaluation ;
dans lequel le réglage de la hauteur de la seconde partie de tour (34) sur la base de l'évaluation comprend en outre l'ajout ou le retrait d'au moins une boîte de tour de la seconde partie de tour (34) ; et dans lequel l'ajout ou le retrait d'au moins une boîte de tour à la seconde partie de tour (34) comprend en outre l'ajout ou le retrait d'au moins une boîte de tour sous une boîte de tour supérieure (55) de la seconde partie de tour (34), la boîte de tour supérieure (55) pouvant être montée sur une nacelle (14) de l'éolienne (10), et la boîte de tour supérieure (50) fournissant une région cylindrique au sommet de la section de tour supérieure (13).

8. Procédé selon la revendication 7, comprenant en outre le montage d'une section de tour de transition (33) entre la section de tour de base (15) et la section de tour supérieure (13), la section de tour de transition (33) comprenant une paroi extérieure (38) définissant une longueur (45) s'étendant d'une première extrémité (46) à une seconde extrémité (47).

9. Procédé selon la revendication 8, dans lequel la paroi extérieure (38) de la section de tour de transition (33) définit en outre un diamètre extérieur (48) qui se rétrécit sur la longueur (45) de celle-ci.

10. Procédé selon la revendication 7, 8 ou 9, comprenant en outre l'installation d'au moins une plate-forme (54) dans la seconde partie de tour (34) après avoir ajouté ou retiré au moins une boîte de tour (52).
